# EUROPEAN PATENT SPECIFICATION

(11) **EP 4 500 259 B1**
(45) Date of publication and mention of the grant of the patent: **18.11.2026**
(21) Application number: 22714551.3
(22) Date of filing: 25.03.2022
(51) Int. Cl.: G02B 27/01, G02B 30/24, G02B 27/18, G02B 27/10

(54) **LIGHT-FIELD IMAGE PROJECTION SYSTEM FOR TIME SEQUENTIAL GENERATING VIRTUAL IMAGES USING A SINGLE NARROW BAND LIGHT SOURCE PER COLOR**
LICHTFELDBILDPROJEKTIONSSYSTEM ZUR ZEITSEQUENTIELLEN ERZEUGUNG VIRTUELLER BILDER UNTER VERWENDUNG EINER EINZELNEN SCHMALBANDLICHTQUELLE PRO FARBE
SYSTÈME DE PROJECTION D'IMAGE DE CHAMP LUMINEUX POUR GÉNÉRATION SÉQUENTIELLE TEMPORELLE D'IMAGES VIRTUELLES À L'AIDE D'UNE SOURCE DE LUMIÈRE À BANDE ÉTROITE UNIQUE PAR COULEUR

(43) Date of publication of application: 05.02.2025
(73) Proprietor: CREAL SA, 1024 Ecublens VD (CH)
(72) Inventor: MASSON, Jonathan, 1070 Puidoux (CH); LE GROS, Christophe, 1024 Ecublens (CH); SMOLIK, Grégoire, 1022 Chavannes-près-Renens (CH); MARCHAND, Paul, 1007 Lausanne (CH)
(74) Representative: P&TS SA (AG, Ltd.)
(86) International application number: PCT/IB2022/052756
(87) International publication number: WO 2023/180791

(56) References cited:
- EP-A1- 1 271 219
- CN-A- 113 448 234
- US-A1- 2021 109 363

## Description

### Technical domain

The present disclosure concerns a near-eye, light-field image projection system, and more particularly a light-field image projection system having a small form factor. The present disclosure concerns a wearable device comprising the light-field image projection system.

### Related art

Known light-field projectors comprise a light source typically comprising an array of point light sources that are collimated into collimated beams. The collimated beams illuminate a spatial light modulator (SLM) under a different set of angles of incidence. Each reflected (or transmitted) beam will carry out a certain image information, produced by the modulation of the SLM. Intermediate optics, possibly comprising combiner optics, re-images the point light sources into viewpoints. The viewpoints form a light field eye box, allowing a user to see an authentic 3D rendering of a digital scene. Typically, the array of point light sources uses LED light sources to sequentially generate the viewpoints that form the light-field.

The large array of spatially disparate light-sources does not allow for the construction of a small form-factor cost-efficient light-field projector.

Document US2021109363 discloses a device including a screen, a first light source configured to emit a first light at a first angle during a first time period and a second light source configured to emit a second light at a second angle during a second time period. The second angle is different than the first angle. The second time period is different than the first time period. The device includes a spatial light modulator configured to provide a first view of digital content based on the first angle of the first light emitted during the first time period and a second view of the digital content based on the second angle of the second light emitted during the second time period.

Document CN113448234 discloses a holographic 3D display system based on spatial light modulator virtual array splicing. The display system comprises a spatial filter array and a solid lens, used to expand the three beams passing through a shutter array into three parallel beams of the same size and uniform intensity.

### Summary

The present disclosure concerns a light-field image projection system comprising a light source comprising a single narrow band point light source per color and configured to emit narrow-band light of which a wavelength spectrum is a narrow band, a splitting device configured to sequentially generate a plurality of incident light beams and form a plurality of virtual light sources at different positions in a first image plane, an SLM configured to generate a modulated beam light and a virtual image for each incident light beam, and a combiner configured to project the virtual images at virtual viewpoints within an eye box region and to transmit natural light from the real world towards the eye box, each viewpoint containing an image of the virtual scene viewed from that viewpoint. The splitting device is further configured to direct the incident light beams to the SLM such that the incident light beams are incident on the surface of the SLM at different angles of incidence, and such as to sequentially select at least one of the virtual viewpoints that is visible in the eye box.

In an embodiment, the splitting device comprises a diffracting element configured to generate the plurality of incident light beams at the different angles of incidence from the narrow-band light source, an optical lens configured to form the plurality of virtual light sources, and an active shutter array configured to sequentially select at least one of the virtual viewpoints that is visible in the eye box.

In another embodiment, the splitting device comprises a lens array comprising a plurality of lenslets, each lenslet generating an incident light beam at an angle of incidence different from the angle of incidence of the incident light beam generated by another lens. The lenslet generates a focused, or defocused, beam.

In yet another embodiment, the splitting device comprises a beam steering device and a lens array comprising a plurality of lenslets, the beam steering device being steerable such as to direct the narrow-band light towards one of the lenslet to generate an incident light beam at an angle of incidence.

The point light source can comprise a laser light source. In particular, the point light source can comprise a red laser point light source configured to generate red light, a green laser point light source configured to generate green light, and a blue laser point light source configured to generate blue light.

The combiner can comprise a holographic reflective holographic combiner.

The present disclosure further concerns a wearable device comprising light-field image projection system, such as augmented/mixed reality or smart glasses.

The light-field image projection system disclosed herein has a small form factor. When used with a holographic reflective holographic combiner, the light-field image projection system can be made more compact and has a great flexibility in its shape. The light-field image projection system has very good see-through performance.

The light-field image projection system does not require an array comprising a plurality of point light sources but can use only a single point light source or a small number of point light sources. In any case, the light-field image projection system requires less point light sources than the total number of viewpoints.

### Short description of the drawings

Exemplar embodiments of the invention are disclosed in the description and illustrated by the drawings in which:
Fig. 1a illustrates schematically a light-field image projection system, according to an embodiment;
Fig. 1b shows the light-field image projection system according to an alternative configuration;
Fig. 2a shows the light-field image projection system, according to an embodiment;
Fig. 2b shows an alternative configuration of the light-field image projection system of Fig. 2a;
Fig. 2c shows another alternative configuration of the light-field image projection system of Fig. 2a;
Fig. 3 represents the light-field image projection system, according to yet another embodiment;
Fig. 4 shows the light-field image projection system comprising a projection optics and a combiner, according to an embodiment;
Figs. 5a to c illustrate different embodiments of the light source comprising three narrow band point light sources (Fig. 5a); and
Fig. 6a reports a time sequence of the switching state of a FLCoS-based spatial light modulator of the light-field image projection system, according to an embodiment; and
Fig. 6b reports a time sequence of the switching state of a FLCoS-based spatial light modulator of the light-field image projection system, according to another embodiment.

### Examples of embodiments

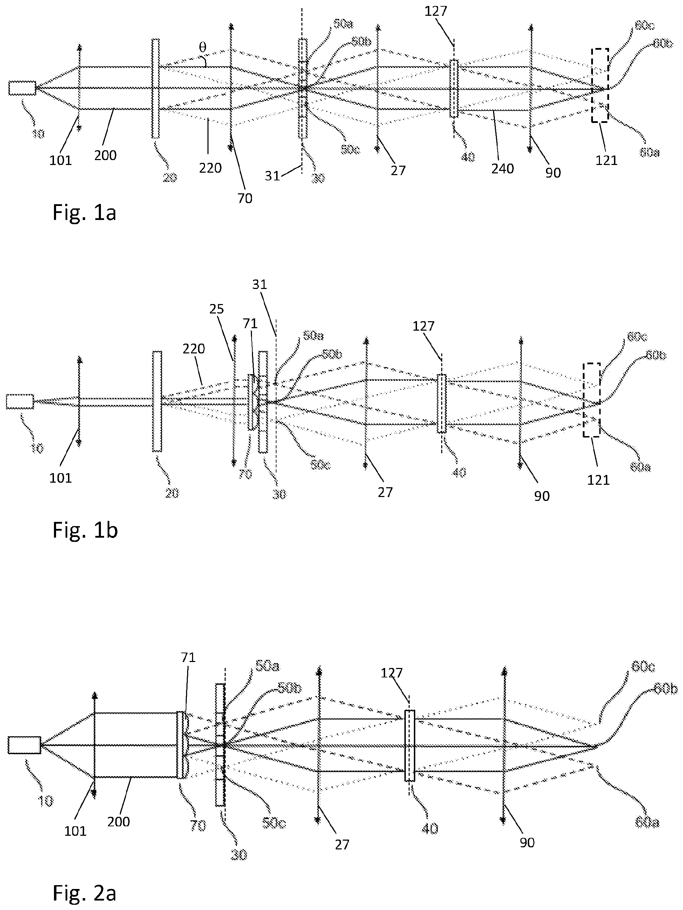

Fig. 1a illustrates schematically a near-eye light-field image projection system, according to an embodiment. The light-field image projection system comprises a light source 10 comprising a single narrow band point light source per color and configured to emit narrow-band light 200 of which a wavelength spectrum is a narrow band.

The light-field image projection system further comprises a splitting device 20, 30, 70, 80 configured to sequentially generate a plurality of incident light beams 220 and form a plurality of virtual light sources 50 at different positions in a first image plane 31.

The light-field image projection system further comprises an SLM 40 configured to generate a modulated beam light 240 and a virtual image for each incident light beam 220.

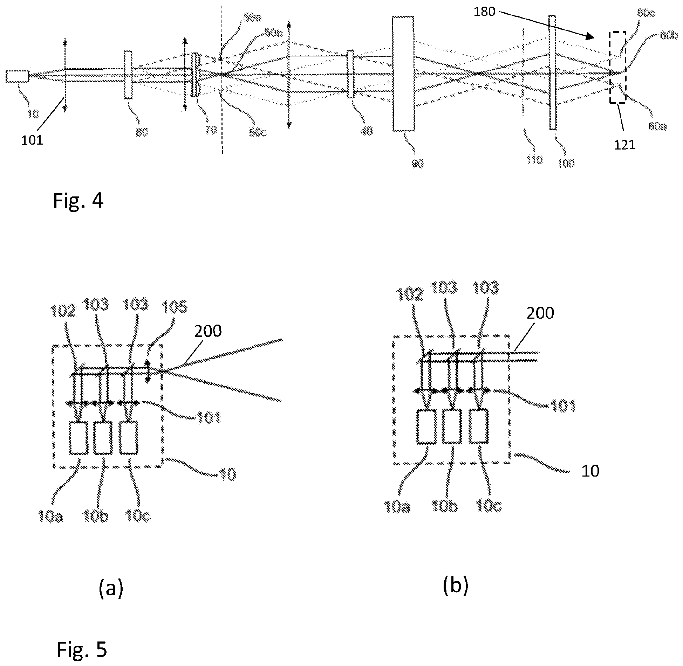

The light-field image projection system further comprises a combiner 100 (see Fig. 4) configured to project the virtual images at virtual viewpoints 60a-60c within an eye box region 121 and transmitting natural light from the real world 180 towards the eye box 121. Each virtual image generated by the spatial light modulator 40 corresponds to the perspective from which it is seen at the virtual viewpoint location, then a light-field image can be formed. Thus, each virtual viewpoint 60a-60c contains a virtual image of the virtual scene viewed from that virtual viewpoint 60a-60c.

In the configuration of Fig. 1a, the splitting device comprises a diffracting element 20 configured to generate the plurality of incident light beams 220 that are incident on the surface of the SLM 40 at different angles of incidence θ.

The diffracting element 20 can comprise a diffractive optical element (DOE), a holographic optical element (HOE), a liquid crystal polarization grating (LCPG), a semi-reflective surface, a Fresnel lens array, a mirror or a metasurface. The splitting device further comprises a first optical lens 70 configured to form the plurality of virtual light sources 50a-50c. The first optical lens 70 focuses the incident light beams 220 forming the incident light beams 220 into the first image plane 31 such as to form an array of the virtual light sources 50a-50c. In Fig. 1a, three incident light beams 220 are represented, forming three virtual light sources 50a-50c at different positions in the first image plane 31. The diffracting element 20 and the first optical lens 70 can be configured to generate any number of incident light beams 220 and virtual light sources 50a-50c. The virtual light sources 50a-50c can further be formed in any two-dimensional arrangement in the first image plane 31.

Again, referring to Fig. 1a, the first optical lens 70 is a single lens. Each of the incident light beams 220 passes through a portion of the first optical lens 70 depending on the angle of incidence θ of the incident light beam 220. The portion of the first optical lens 70 focusses the incident light beams 220 passing through it such as to form light source 50a-50c in the first image plane 31.

In one aspect, the splitting device further comprises a pixelated active shutter array 30 configured to sequentially select at least one of the virtual viewpoints 60a-60c that is visible in the eye box 121. The active shutter array 30 allows each of the incident light beams 220 to be transmitted to the rest of the optical system or not. The active shutter 30 can comprise a transparent or reflective ferroelectric liquid crystal device. Alternatively, the active shutter 30 can comprise a liquid crystal array or an active micromirror array. The choice of the type of active shutter 30 may depend on the required shutter speed. The active shutter array can be configured to function in transmission or reflection.

Each virtual viewpoint 60a-60c can be projected in a time sequence. For instance, the pixelated shutter array 30 can allow the virtual light source 50a to reach the virtual viewpoint 60a while blocking the virtual light sources 50b and 50c and thus blocking the virtual viewpoints 60b and 60c. At this moment, only the virtual viewpoint 60a will be visible and transmitted or reflected through the optical system. At a later moment, only the virtual light source 50b will be able to be transmitted by the active shutter 30 and the virtual viewpoint 60b will be visible and so on for the virtual light source 50c.

A corresponding image is generated for each virtual viewpoint 60a-60c by the SLM 40. For instance, when the virtual light source 50a is allowed to reach the virtual viewpoint 60a by the shutter array 30, a 2D image of a virtual scene corresponding to the perspective from which it is seen at the virtual viewpoint location 60a is generated by the SLM 40. The same process is repeated in a time-sequence for the other virtual viewpoints 60b and 60c. Each time, the 2D image of the virtual scene corresponds to the perspective from which it is seen at the virtual viewpoint location 60b or 60c. Then a light-field image is formed. Note that, since any number of virtual light sources 50a-50c can be generated, the light-field image projection system can project any number of virtual viewpoints 60a-60c in a time sequence.

The refresh rate of the sequence generating the virtual viewpoints 60a-60c can be fast enough to happen within the integration time of the eye that is typically between 20 Hz to 1000 Hz.

The light-field image projection system thus enables time-sequential virtual viewpoint generation using at least a single narrow band point light source per color, based on a passive light beam splitter 20 and an active shutter array 30 sequentially selecting the visible virtual viewpoint 60a-60c. The light-field image projection system further enables the projection of a 3D image with monocular depth of field which allows placing virtual content on any depth plane.

The light-field image projection system can further comprise a first projection optics 27 arranged between the splitting device 20, 30, 70, 80 and the SLM 40, and configured to collimate and project the incident light beams 220 such as to form intermediate images in an intermediate image plane 127 coinciding with the location of the SLM 30. The light-field image projection system can further comprise a second projection optics 90, arranged between the SLM 40 and the eye box 121, and configured to project the modulated beam light 240 such as to form the virtual viewpoint 60a-60c.

The incident light beams 220 have a luminous intensity (wavelength-weighted power emitted by the incident light beams 220) that corresponds substantially to the luminous intensity of the narrow-band light 200 divided by the number of virtual light sources 50. Assuming that the intensity profile of the narrow-band light 200 is Gaussian, the intensity profile of the envelope of each of the virtual light sources 50 is also Gaussian, such that the intensity of each separated virtual light source 50 is not equal and follows that Gaussian envelope.

In the case of the light-field image projection system shown in Fig.1a, the numerical aperture NA of the system can be defined by NA = D/2f where f is the focal length of the first optical lens 70, and D is the size of the incident light beams 220.

Assuming the incident light beams 220 of 10 mm and 25 virtual light sources 50 (for example an array of 5x5 virtual light sources 50), the ratio of luminous intensity of a single virtual light source 50 over the luminous intensity of the narrow-band light 200 is 4%. In this configuration, the numerical aperture NA of the virtual light source 50 corresponds to 0.2 (with f = 5 mm and D = 2 mm).

Fig. 1b shows the light-field image projection system according to an alternative configuration, wherein the first optical lens 70 is a lens array comprising a plurality of lenslets 71. In this configuration, each incident light beams 220 passes through one of the lenslet 71 depending on the angle of incidence θ. Each lenslet 71 focusses the incident light beams 220 passing through it such as to form light source 50a-50c in the first image plane 31. Optionally, the light-field image projection system can further comprise a second optical element 25. The second optical element 25 allows for placing the principal ray (or chief ray) of each incident light beam 220 parallel to each other before they reach the first optical lens 70. In the absence of the second optical element 25, the principal ray of the incident light beams 220 would diverge from each other requiring a larger first optical lens 70, but also a larger active shutter 30, and first projection optics 27, thus making the projection system larger.

As illustrated in Fig. 1b, the size of the narrow-band light 200 can be made to correspond substantially to the size of a lenslet 71.

Fig. 2a shows the light-field image projection system according to another embodiment. The splitting device comprises a lens array 70 comprising a plurality of lenslets 71. The lens array 70 is configured to focus at least a portion of the narrow-band light 200 such as to generate the incident light beams 220 and form an array of the virtual light sources 50a-50c in the first image plane 31. In particular, each lenslet 71 generates an incident light beam 220 and forms a corresponding virtual light source 50a-50c. The generated incident light beams 220 are incident on the surface of the SLM 40 at different angles of incidence θ. The lenslets 71 can comprise converging or diverging lenses.

The splitting device can further comprise an active shutter array 30 as described above.

The active shutter array 30 may be arranged at different locations in the optical path of the incident light beam 220 or modulated beam light 240.

Referring to Figs. 1a and 2a, the active shutter array 30 is arranged substantially in the first image plane 31 such that at least one of the virtual light sources 50a-50c is transmitted or reflected at a given time.

In the configuration of Fig. 1b, the active shutter array 30 is arranged near the focal point of the lenslets 71, in particular between the lens array 70 and the first image plane 31.

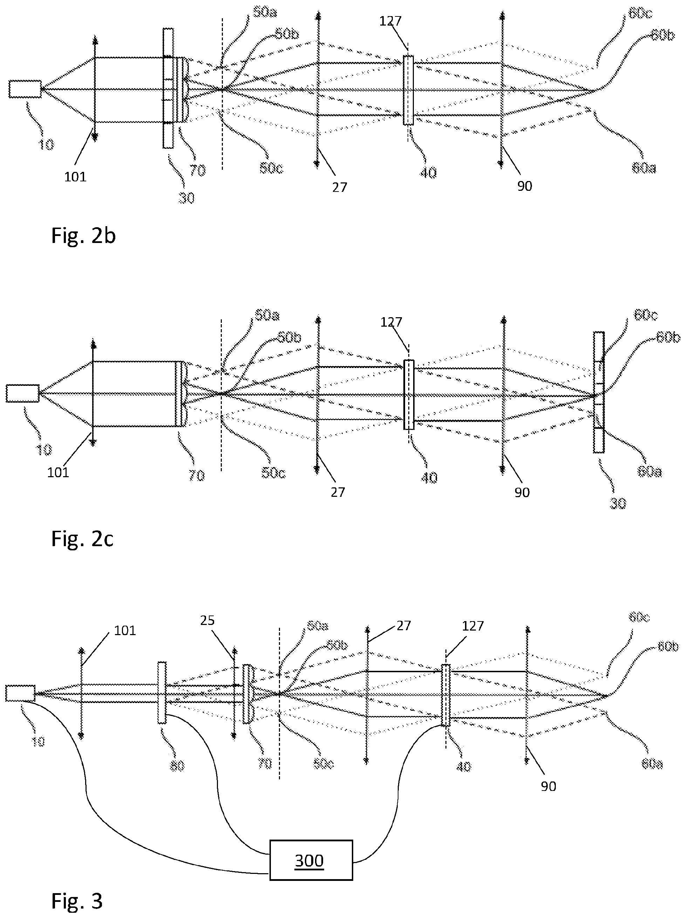

Fig. 2b shows an alternative configuration of the light-field image projection system of Fig. 2a, where the active shutter array 30 is arranged between the light source 10 and the splitting device 20.

Fig. 2c shows another alternative configuration of the light-field image projection system of Fig. 2a, where the active shutter array 30 is arranged between the SLM 40 and the eye box 121. For instance, the active shutter array 30 can be arranged near the virtual viewpoints 60a-60c.

As illustrated in Fig. 2a to 2c, the size of the narrow-band light 200 can correspond substantially to the size of the lens array 70.

The arrangements of the active shutter array 30 shown in Figs. 2a-2c can be implemented in the configurations of the light-field image projection system illustrated in Figs 1a and 1b.

This location can also be used in the configuration with the beam splitter 20. Note that more than one light source 10 can be allowed to pass through at the same time. This can be used to generate a brighter image, a periphery image or to fill the colors of an object.

In the case of the light-field image projection system shown in Figs.1b, 2a-2c the numerical aperture NA of the virtual light source 50 can be defined by NA = D/2f where f is the focal length of the first optical lens 70, and D is the size of the diameter of a lenslet 71 when the beam fills the lenslet aperture. As discussed above, assuming the incident light beams 220 of 10 mm and 25 virtual light sources 50 (for example an array of 5x5 virtual light sources 50), the ratio of luminous intensity of a single virtual light source 50 over the luminous intensity of the narrow-band light 200 is 4%. The numerical aperture NA is given by the size of a lenslet 71 (NA = 0.2 for a lenslet diameter of 2 mm).

More generally, in the case of the light-field image projection system shown in Figs.1a, 1b, 2a-2c, the ratio of luminous intensity of a single virtual light source 50 over the luminous intensity of the narrow-band light 200 depends on the number of virtual light sources 50. In an embodiment, the ratio of luminous intensity of a single virtual light source 50 over the luminous intensity of the narrow-band light 200 is at least 1%. Alternatively, the ratio of luminous intensity of a single virtual light source 50 over the luminous intensity of the narrow-band light 200 can be at least 5%, 10% or 20%.

The light-field image projection system is represented in Fig. 3, according to yet another embodiment. In this configuration, the splitting device comprises a beam steering device 80 and a lens array 70 comprising a plurality of lenslets 71. The beam steering device 80 is steerable such as to direct the narrow-band light 200 towards one of the lenslet 71 to generate an incident light beam 220 at a given angle of incidence θ.

The beam steering device 80 can comprise a tilting mirror that is tiltable such as to direct the narrow-band light 200 towards one of the lenslet 71.

The beam steering device 80 can be configured to be steered in a first position, stop its movement in the first position for a time duration during which the light source 10 is turned on such that an incident light beam 220 is directed towards one of the lenslets 71. The beam steering device 80 can be further configured to be steered in a second position, stop its movement in the second position for a time duration during which the light source 10 is turned on such that an incident light beam 220 is directed towards another lenslet 71. During the steering of the beam steering device 80 the light source 10 is turned off. The beam steering device 80 can be configured to be steered in any number of positions that corresponds to the number of lenslets 71 in the lens array 70, and stop its movement such that an incident light beam 220 is directed towards one of the lenslets 71. A virtual viewpoint 60a-60c is generated each time the light source 10 is turned on and an incident light beam 220 is directed towards one of the lenslets 71.

In one aspect, the incident light beam 220 can pass through a second optical element 25 before reaching a lenslet 71 of the lens array 70. As discussed with Fig. 1b, the second optical element 25 allows for placing the principal ray of each incident light beam 220 parallel to each other before they reach the first optical lens 70.

As illustrated in Fig. 3, the size of the narrow-band light 200 can correspond substantially to the size of a lenslet 71. In this configuration, the major portion of the narrow-band light 200, and possible substantially the whole narrow-band light 200, is used to generate the incident light beam 220 and to form a virtual light source 50, and thus a virtual viewpoint 60a-60c. In contrast, in the configurations of the light-field image projection system shown in Figs. 1a, 1b and 2a to 2c, the narrow-band light 200 is split and only a portion of the narrow-band light 200 is used to generate the incident light beam 220 and to form a virtual viewpoint 60a-60c. The remaining portion of the narrow-band light 200 is blocked by the active shutter 30. Thus, only a fraction of the initial narrow-band light 200 is used to create a virtual viewpoint 60a-60c. Thus, the incident light beams 220 have a luminous intensity that corresponds substantially to the luminous intensity of the narrow-band light 200.

In an optional configuration, the narrow-band light 200 can be collimated by a collimating optical element 101.

The light-field image projection system in the configurations of Figs 1b to 3 also comprise the first projection optics 27 arranged between the splitting device 20, 30, 70, 80 and the SLM 40, and configured to collimate and project the incident light beams 220.

Fig. 4 shows a schematic representation of the light-field image projection system comprising the second projection optics 90 arranged between the SLM 40 and the combiner 100. The second projection optics 90 is configured to form intermediate virtual viewpoints 60a-60c in an intermediate image plane 110, between the second projection optics 90 and the combiner 100. The second projection optics 90 can comprise multiple refractive, reflective, diffractive, or freeform optical surfaces. The combiner 100 is transparent or semi-transparent allowing to project the virtual images at virtual viewpoints 60a-60c within an eye box region 121 and transmitting natural light from the real world 180 towards the eye box 121. The combiner 100 can comprise a reflection holographic, transmission holographic, refractive, reflective, or diffractive combiner.

In a preferred embodiment, the combiner 100 comprises a holographic reflective holographic combiner allowing to selectively reflect the 3 RGB color components of the projector while allowing the rest of the visible spectrum to be transmitted. A holographic reflective combiner 100 has a broadband acceptance angle of the incoming light between 15° to 80°.

In an embodiment, the light source 10 comprises a laser point light source. In a possible configuration, the light source 10 can comprise a red laser point light source configured to generate red light, a green laser point light source configured to generate green light, and a blue laser point light source configured to generate blue light. In another possible configuration, the light source 10 can comprise a single narrow band point light source configured to emit white light comprising red light, green light, and blue light.

In contrast to LED light sources, laser light sources have enough optical power density to be split into multiple virtual light sources. A single laser point light source that is split can thus be used advantageously in combination with a holographic combiner. A possible alternative comprises using an array of small VCSEL lasers, each VCSEL laser being a single point light source. When using an array of VCSEL lasers, no splitting device to generate the plurality of incident light beams 220 is needed. Indeed, each incident light beam 220 is generated by a VCSEL laser of the array. However, arrays of VCSEL lasers are currently available only for emitting red light. On the other hand, edge emitting laser are technically difficult, bulky costly to integrate in an array form.

Also in contrast to LED light sources, a laser light source is substantially monochromatic and produces significantly reduced chromatic dispersion on the projection system, in particular, in the combiner. Using multiple laser light sources to replace the current multiple LED is a challenge in terms of miniaturization of the device, packaging, and power consumption. The light-field image projection system using a single narrow band light source per color is thus advantageous.

Figs. 5a to c illustrate different embodiments of the light source 10. In particular, Fig. 5a shows the light source 10 comprises three narrow band point light sources 10a-10c, for example one narrow band point light source per color. The light source 10 comprises a first narrow band point light source 10a emitting a red narrow-band light 200, a second narrow band point light source 10c emitting a green narrow-band point light 200, and a third narrow band point light source 10c emitting a blue narrow-band light 200.

In one aspect, the first point light source 10a can be collimated by a collimating optical element 101 and then reflected off a mirror 102. Similarly, the second and third point light sources 10b and 10c can also be collimated by a collimating optical element 101 and are reflected off a dichroic plate 103. The dichroic plate 103 allows for a specific color to be reflected and another color to be transmitted. For example, the first point light source 10a is transmitted by the dichroic plate 102 and the second point light source 10b is reflected by the dichroic plate 102 effectively combining the first and second point light sources 10a and 10b. At the exit of the light source 10 the first, second and third point light sources 10a, 10b and 10c are combined in a single narrow-band light 200. An aperture lens 105 can be added to expand the numerical aperture of the light source 10.

In the configuration of Fig. 5b, the light source 10 comprises no lens 105, such that the narrow-band light 200 remains collimated or with a small numerical aperture.

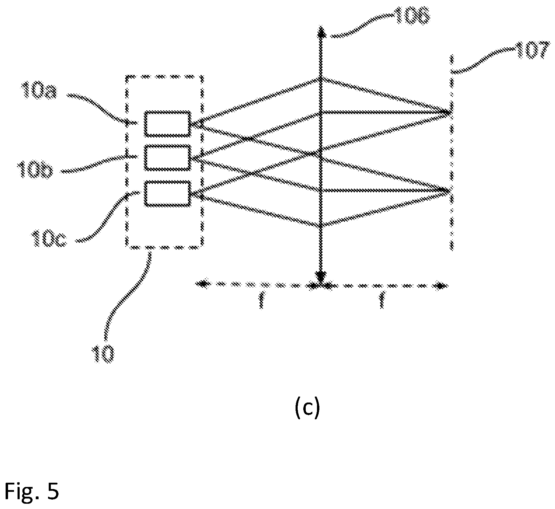

In the configuration of Fig. 5c, the point light sources 10a-10c are combined using a single collimating optical element 106. The point light source 10a, 10b and 10c can be arranged along a row (as shown in Fig. 5c), on top of each other, in a triangular, or in square shape. When the single collimating optical element 106 is placed at a distance close to the focal length f of the single collimating optical element 106 to the point light sources 10a-10c, the latter overlap at the focal plane 107 of the collimating optical element 106 at a distance f on the side of the collimating optical element 106 opposite to the light source 10.

Referring back to the projection system configuration shown in Fig. 3, the SLM 40 can comprise a ferroelectric liquid crystal on silicon (FLCoS). The light-field image projection system can further comprise a controller 300 configured to control the switching state of the SLM 40 in synchronization with the beam steering device 80 and the light source 10.

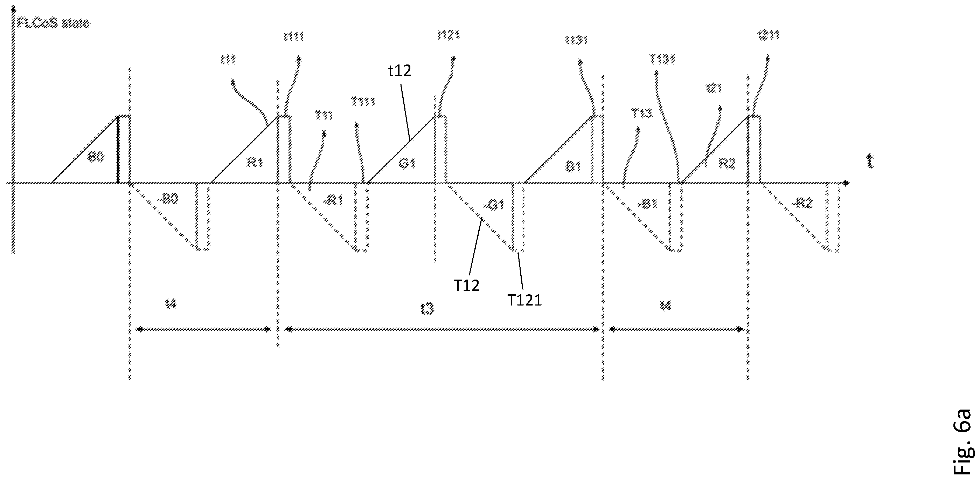

Fig. 6a reports the switching state of the FLCoS-based SLM 40 as a function of time t. An FLCoS can display an image information corresponding to a light source illumination, which is illustrated in Fig. 6a by a color, such as red (R), green (G), or blue (B), corresponding to the narrow band point light sources 10a-10c emitting respectively a red, green and blue narrow-band light 200. In Fig. 6a, number 0, 1 and 2 corresponds to a position of the sequential virtual light sources 50a-50c.

As shown in Fig. 6a, for one image information R1, for example a red image information, the FLCoS takes a certain amount of time (or positive setup time t11) to switch to the correct state. The positive setup time t11 corresponds to the time for the FLCoS R channel positive data of a virtual light sources 50a-50c. The FLCoS remains in the correct state for a positive illumination time t111, which corresponds to the time during which the light source 10 is actually turned on to project the image. Illuminating the FLCoS before or after the illumination time t111 window would result in lower image contrast.

After the positive illumination time t111, in order to keep a balanced charge level of the FLCoS, a negative image information is sent to the FLCoS with a similar timing than the positive image information (shown by the dotted line -R1 step during a negative setup time T11 and a negative illumination time T111). Without this charge balance, the FLCoS SLM can be damaged. During the negative setup time T11 and the negative illumination time T111, there is no light source illumination. In other words, the controller 300 turns on the light source 10 during the positive illumination time t111, t121, t131 when the beam steering device 80 is not moving and directs the narrow-band light 200 towards one of the lenslet 71, and to turn off the light source 10 at any other time.

The same illumination sequence described above applies for the other colors, including green (G1) with the positive and negative setup times t12, T12 and illumination times t121, T121, and blue (B1) with the positive and negative setup times t13, T13 and illumination times t131, T131.

Looking at a global RGB sequence illumination of a certain virtual light source position 50a-50c (R1/G1/B1 for example), the beam steering device 80 (such as a tilting mirror) needs to be at least in a stable position during a stabilization time t3, which covers the three RGB illumination times t111, t121 and t131. After that, the beam steering device 80 needs a certain amount of time, switching time t4, to switch to the next position corresponding to the next virtual light source 50a-50c in the virtual point source array 50, before another image information R2, for example a red image information, needs to be turned on during t211. The switching time t4 is shown here as the sum of times T13, T131 and t21 which are intrinsically tied to the whole projection data flow of the high level system architecture. As such, the switching time t4 can be very small, in the range of 50 µs to 500 µs. Thus, the beam steering device 80 needs to switch at least as fast as the switching time t4, which can be a very strict physical constraint.

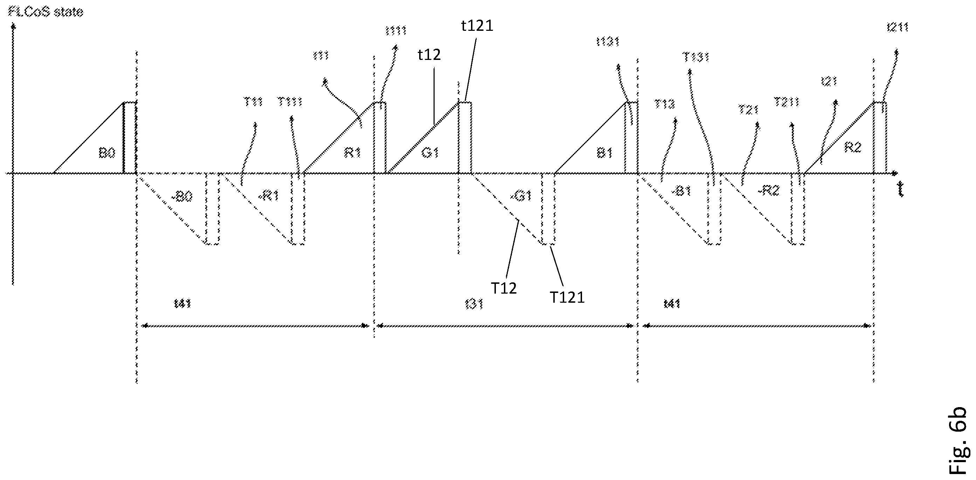

Fig. 6b reports an alternative time sequence of the switching state of the FLCoS-based SLM 40. The timing of the positive setup and illumination times t11, t111 and the negative setup and illumination times T11, T111 are reversed compared to the timing of Fig. 6a. In other words, at least one positive setup time t11, t12, t13 and positive illumination time t111, t112, t113 of a color is inverted (or reversed) with the corresponding negative setup time T11, T12, T13 and negative illumination time T111, T112, T113.

The beam steering device moves from one position to another during the negative setup time T11, T12, T13 and illumination time T111, T121, T131 of the previous illumination step and the positive setup time of the following illumination step. The beam steering device 80 thus has more time to move from one position to another during the negative setup and illumination time of the previous illumination step, and the negative setup and illumination time and the positive setup time of the following illumination step.

By reversing the timing, the switching time t4 can be increased (increased switching time t41) by at least 30% or more depending on the value of the illumination times t121 and t131. Compared to the timing of Fig. 6a, the reversed timing of Fig. 6b conserves sequential positive and negative image data sent to the FLCoS SLM 40 for the same color and virtual light source position, which means irreversible damage will be induced to the FLCoS-based SLM 40.

Optionally, the timing of the positive setup and illumination times t12, t121 and the negative setup and illumination times T12, T121 for green and the positive setup and illumination times t13, t131 and the negative setup and illumination times T13, T131 for blue can also be reversed compared to the timing of Fig. 6a.

It is understood that the present invention is not limited to the exemplary embodiments described above and other examples of implementations are also possible within the scope of the patent claims. For example, the light source 10 can comprise two or more than three narrow band point light sources 10a-10c, and/or two or more than three virtual light sources 50a-50c.

### Reference Numbers and Symbols

- 10: light source
- 10a: first narrow band point light source
- 10b: second narrow band point light source
- 10c: third narrow band point light source
- 20: beam splitter
- 25: second optical element
- 30: active shutter
- 31: first image plane
- 40: spatial light modulator
- 50, 50a, 50b, 50c: virtual light source
- 60, 60a, 60b, 60c: virtual viewpoint
- 70: first optical lens, lens array
- 71: lens
- 80: beam steering device
- 90: second projection optics
- 100: combiner
- 101: collimating optical element
- 102: mirror
- 103: dichroic plate
- 105: lens
- 106: collimating optical element
- 107: focal plane
- 110: intermediate image plane
- 180: natural light from the real world
- 200: narrow-band light
- 220: incident light beam
- 240: modulated beam light
- 300: controller
- θ: angle of incidence
- t11: positive setup time for red R1
- t111: positive illumination time for red R1
- T11: negative setup time for red R1
- T111: negative illumination time for red R1
- t12: positive setup time for green G1
- t121: positive illumination time for green G1
- T12: negative setup time for green G1
- T121: negative illumination time for green G1
- T13: positive setup time for blue B1
- t131: positive illumination time for blue B1
- T13: negative setup time for blue B1
- T131: negative illumination time for blue B1
- t3: stabilization time
- t4: switching time

## Claims

1. Light-field image projection system comprising:
a light source (10) comprising a single narrow band point light source per color and configured to emit narrow-band light (200) of which a wavelength spectrum is a narrow band
a splitting device (20, 30, 70, 80) configured to sequentially generate a plurality of incident light beams (220) and form a plurality of virtual light sources (50) at different positions in a first image plane (31);
a spatial light modulator (40) configured to generate a modulated beam light (240) and a virtual image for each incident light beam (220); and
a combiner (100) configured to project the virtual images at virtual viewpoints (60) within an eye box region (121) and to transmit natural light from the real world (80) towards the eye box (121), each viewpoint (60) containing an image of the virtual scene viewed from that viewpoint (60);
wherein the splitting device (20, 30, 70, 80) is further configured to direct the incident light beams (220) to the spatial light modulator (40) such that the incident light beams (220) are incident on the surface of the spatial light modulator (40) at different angles of incidence (θ), and such as to sequentially select at least one of the virtual viewpoints (60) that is visible in the eye box (121); and
wherein the ratio of luminous intensity of a single virtual light source (50) of said plurality of virtual light sources (50) over the luminous intensity of the narrow-band light (200) is at least 1%.

2. The projection system according to claim 1,
wherein the incident light beams (220) have luminous intensity that substantially corresponds to the luminous intensity of the narrow-band light (200) divided by the number of virtual light source (50).

3. The projection system according to claim 1 or 2,
wherein the splitting device comprises a diffracting element (20) configured to generate the plurality of incident light beams (220) at the different angles of incidence (θ) from the narrow-band light (200), an optical lens (70) configured to form the plurality of virtual light sources (50), and an active shutter array (30) configured to sequentially select at least one of the virtual viewpoints (60) that is visible in the eye box (121).

4. The projection system according to claim 3,
wherein the optical lens is a single lens (70), each of the incident light beams (220) passing through a portion of the lens (70) depending on the angle of incidence (θ) of the incident light beam (220).

5. The projection system according to claim 3,
wherein the optical lens (70) is a lens array comprising a plurality of lenslets (71), each incident light beams (220) passing through one of the lenslet (71) depending on the angle of incidence (θ).

6. The projection system according to any one of claims 3 to 5, wherein the diffracting element (20) comprises a diffractive optical element (DOE), a holographic optical element (HOE), a liquid crystal polarization grating (LCPG), a semi-reflective surface, a mirror or a metasurface.

7. The projection system according to claim 1 or 2,
wherein the splitting device comprises a lens array (70) comprising a plurality of lenslets (71), each lenslet (71) generating an incident light beam (220) at an angle of incidence (θ) different from the angle of incidence (θ) of the incident light beam (220) generated by another lens (71);
and an active shutter array (30) configured to sequentially select at least one of the virtual viewpoints (60) that is visible in the eye box (121).

8. The projection system according to any one of claims 5 to 7, wherein the size of the narrow-band light (200) corresponds substantially to the size of the lens array (70).

9. The projection system according to claim 1,
wherein the splitting device comprises a beam steering device (80) and a lens array (70) comprising a plurality of lenslets (71), the beam steering device (80) being steerable such as to direct the narrow-band light (200) towards one of the lenslet (71) to generate an incident light beam (220) at an angle of incidence (θ).

10. The projection system according to claim 9,
wherein the size of the narrow-band light (200) corresponds substantially to the size of a lenslet (71), such that the incident light beam (220) has luminous intensity that is substantially 100% of the luminous intensity of the narrow-band light (200).

11. The projection system according to any one of claims 3 to 8, wherein the active shutter array (30) comprises a transparent or reflective ferroelectric liquid crystal device, or an array of active micromirror.

12. The projection system according to any one of claims 3 to 8, wherein the active shutter array (30) is arranged substantially in the first image plane (31) such that at least one of the virtual light sources (50) is transmitted at a given time.

13. The projection system according to any one of claims 3 to 8, wherein the active shutter array (30) is arranged between the light source (10) and the splitting device (70) or between the spatial light modulator (40) and the eye box (121).

14. The projection system according to any one of claims 1 to 13, wherein the light source (10) comprises a red laser point light source configured to generate red light, a green laser point light source configured to generate green light, and a blue laser point light source configured to generate blue light; or
wherein the light source (10) comprises a single narrow band point light source configured to emit white light comprising red light, green light, and blue light.

15. The projection system according to any one of claims 9 to 14,
wherein the SLM (40) comprises a ferroelectric liquid crystal on silicon; and
wherein the light-field image projection system comprises a controller (300) configured to control the switching state of the SLM (40) in synchronization with the beam steering device (80) and the light source (10).

16. The projection system according to claim 15,
wherein the controller (300) is configured to switch a color state of the SLM (40) during a positive setup time (t11, t12, t13) and negative setup time (T11, T12, T13), and to let the SLM (40) in the switched color state during a positive illumination time (t111, t121, t131) and a negative illumination time (T111, T121, T131);
wherein the controller (300) is further configured to turn on the light source (10) during the positive illumination time (t111, t121, t131) when the beam steering device (80) is not moving and directs the narrow-band light (200) towards one of the lenslet (71), and to turn off the light source (10) at any other time;
wherein the beam steering device moves from one position to another during the negative setup time (T11, T12, T13) and illumination time (T111, T121, T131) of the previous illumination step and the positive setup time of the following illumination step; and
wherein at least one positive setup time (t11, t12, t13) and positive illumination time (t111, t112, t113) of a color is inverted with the corresponding negative setup time (T11, T12, T13) and negative illumination time (T111, T112, T113) so that the beam steering device (80) can have more time to move from one position to another during the negative setup and illumination time of the last illumination step plus the negative setup and illumination time of the next illumination step plus the positive setup time of the next illumination step.

17. Wearable device comprising the light-field image projection system according to any one of claims 1 to 16, comprising an augmented/mixed reality device or smart glasses.

## Patentansprüche

1. Lichtfeld-Bildprojektionssystem, umfassend: eine Lichtquelle (10), welche eine einzige schmalbandige Punktlichtquelle pro Farbe umfasst und dazu konfiguriert ist, um schmalbandiges Licht (200) zu emittieren, dessen Wellenlängenspektrum ein schmales Band ist; eine Aufspaltungsvorrichtung (20, 30, 70, 80), welche dazu konfiguriert ist, um sequenziell eine Vielzahl von einfallenden Lichtbündeln (220) zu erzeugen und eine Vielzahl von virtuellen Lichtquellen (50) an unterschiedlichen Positionen in einer ersten Bildebene (31) zu bilden; einen räumlichen Lichtmodulator (40), welcher dazu konfiguriert ist, um für jedes einfallende Lichtbündel (220) ein moduliertes Lichtbündel (240) und ein virtuelles Bild zu erzeugen; und einen Kombinierer (100), welcher dazu konfiguriert ist, um die virtuellen Bilder an virtuellen Blickpunkten (60) innerhalb eines Eyebox-Bereichs (121) zu projizieren und natürliches Licht aus der realen Welt (80) in Richtung der Eyebox (121) zu übermitteln, wobei jeder Blickpunkt (60) ein Bild der aus diesem Blickpunkt (60) betrachteten virtuellen Szene enthält; worin die Aufspaltungsvorrichtung (20, 30, 70, 80) ferner dazu konfiguriert ist, um die einfallenden Lichtbündel (220) auf den räumlichen Lichtmodulator (40) derart zu lenken, dass die einfallenden Lichtbündel (220) auf die Oberfläche des räumlichen Lichtmodulators (40) unter unterschiedlichen Einfallswinkeln (*θ*) einfallen, und um sequenziell mindestens einen der in der Eyebox (121) sichtbaren virtuellen Blickpunkte (60) auszuwählen; und worin das Verhältnis der Lichtstärke einer einzelnen virtuellen Lichtquelle (50) der besagten Vielzahl von virtuellen Lichtquellen (50) zur Lichtstärke des schmalbandigen Lichts (200) mindestens 1% beträgt.

2. Projektionssystem gemäss Anspruch 1, worin die einfallenden Lichtbündel (220) eine Lichtstärke aufweisen, welche im Wesentlichen der Lichtstärke des schmalbandigen Lichts (200) geteilt durch die Anzahl der virtuellen Lichtquellen (50) entspricht.

3. Projektionssystem gemäss Anspruch 1 oder 2, worin die Aufspaltungsvorrichtung ein Beugungselement (20) umfasst, welches dazu konfiguriert ist, um die Vielzahl von einfallenden Lichtbündeln (220) unter den unterschiedlichen Einfallswinkeln (*θ*) aus dem schmalbandigen Licht (200) zu erzeugen, eine optische Linse (70), welche dazu konfiguriert ist, um die Vielzahl von virtuellen Lichtquellen (50) zu bilden, und ein aktives Shutter-Array (30), welches dazu konfiguriert ist, um sequenziell mindestens einen der in der Eyebox (121) sichtbaren virtuellen Blickpunkte (60) auszuwählen.

4. Projektionssystem gemäss Anspruch 3, worin die optische Linse eine Einzellinse (70) ist, wobei jedes der einfallenden Lichtbündel (220) in Abhängigkeit vom Einfallswinkel (*θ*) des einfallenden Lichtbündels (220) durch einen Abschnitt der Linse (70) tritt.

5. Projektionssystem gemäss Anspruch 3, worin die optische Linse (70) ein Linsenarray ist, welches eine Vielzahl von Mikrolinsen (71) umfasst, wobei jedes einfallende Lichtbündel (220) in Abhängigkeit vom Einfallswinkel (*θ*) durch eine der Mikrolinsen (71) tritt.

6. Projektionssystem gemäss irgendeinem der Ansprüche 3 bis 5, worin das Beugungselement (20) ein diffraktives optisches Element (DOE), ein holografisch-optisches Element (HOE), ein Flüssigkristall-Polarisationsgitter (LCPG), eine teilreflektierende Oberfläche, einen Spiegel oder eine Metaoberfläche umfasst.

7. Projektionssystem gemäss Anspruch 1 oder 2, worin die Aufspaltungsvorrichtung ein Linsenarray (70) umfasst, welches eine Vielzahl von Mikrolinsen (71) aufweist, wobei jede Mikrolinse (71) ein einfallendes Lichtbündel (220) unter einem Einfallswinkel (*θ*) erzeugt, der sich von dem Einfallswinkel (*θ*) des von einer anderen Linse (71) erzeugten einfallenden Lichtbündels (220) unterscheidet; und ein aktives Shutter-Array (30), welches dazu konfiguriert ist, um sequenziell mindestens einen der in der Eyebox (121) sichtbaren virtuellen Blickpunkte (60) auszuwählen.

8. Projektionssystem gemäss irgendeinem der Ansprüche 5 bis 7, wobei die Grösse des schmalbandigen Lichts (200) im Wesentlichen der Grösse des Linsenarrays (70) entspricht.

9. Projektionssystem gemäss Anspruch 1, worin die Aufspaltungsvorrichtung eine Strahlablenkungsvorrichtung (80) und ein Linsenarray (70) umfasst, welches eine Vielzahl von Mikrolinsen (71) aufweist, wobei die Strahlablenkungsvorrichtung (80) derart ablenkbar ist, dass sie das schmalbandige Licht (200) auf eine der Mikrolinsen (71) lenkt, um ein einfallendes Lichtbündel (220) unter einem Einfallswinkel (*θ*) zu erzeugen.

10. Projektionssystem gemäss Anspruch 9, worin die Grösse des schmalbandigen Lichts (200) im Wesentlichen der Grösse einer Mikrolinse (71) entspricht, sodass das einfallende Lichtbündel (220) eine Lichtstärke aufweist, welche im Wesentlichen 100% der Lichtstärke des schmalbandigen Lichts (200) entspricht.

11. Projektionssystem gemäss irgendeinem der Ansprüche 3 bis 8, worin das aktive Shutter-Array (30) eine transparente oder reflektierende ferroelektrische Flüssigkristallvorrichtung oder ein Array von aktiven Mikrospiegeln umfasst.

12. Projektionssystem gemäss irgendeinem der Ansprüche 3 bis 8, worin das aktive Shutter-Array (30) im Wesentlichen in der ersten Bildebene (31) derart angeordnet ist, dass zu einer gegebenen Zeit mindestens eine der virtuellen Lichtquellen (50) transmittiert wird.

13. Projektionssystem gemäss irgendeinem der Ansprüche 3 bis 8, worin das aktive Shutter-Array (30) zwischen der Lichtquelle (10) und der Aufspaltungsvorrichtung (70) oder zwischen dem räumlichen Lichtmodulator (40) und der Eyebox (121) angeordnet ist.

14. Projektionssystem gemäss einem der Ansprüche 1 bis 13,
worin die Lichtquelle (10) umfasst: eine rote Laser-Punktlichtquelle, welche dazu konfiguriert ist, um rotes Licht zu erzeugen, eine grüne Laser-Punktlichtquelle, welche dazu konfiguriert ist, um grünes Licht zu erzeugen, und eine blaue Laser-Punktlichtquelle, welche dazu konfiguriert ist, um blaues Licht zu erzeugen; oder worin die Lichtquelle (10) eine einzige schmalbandige Punktlichtquelle umfasst, welche dazu konfiguriert ist, um weisses Licht zu emittieren, welches rotes Licht, grünes Licht und blaues Licht umfasst.

15. Projektionssystem gemäss irgendeinem der Ansprüche 9 to 14, worin der SLM (40) einen ferroelektrischen Flüssigkristall auf Silizium (LCoS) umfasst; und worin das Lichtfeld-Bildprojektionssystem eine Steuerung (300) umfasst, welche dazu konfiguriert ist, um den Schaltzustand des SLM (40) synchronisiert mit der Strahlablenkungsvorrichtung (80) und der Lichtquelle (10) zu steuern.

16. Projektionssystem gemäss Anspruch 15, worin die Steuerung (300) dazu konfiguriert ist, um einen Farbzustand des SLM (40) während einer positiven Setup-Zeit (*t*11, *t*12, *t*13) und einer negativen Setup-Zeit (*T*11, *T*12, *T*13) umzuschalten und den SLM (40) während einer positiven Beleuchtungszeit (*t*111, *t*121, *t*131) und einer negativen Beleuchtungszeit (*T*111, *T*121, *T*131) im umgeschalteten Farbzustand zu belassen; worin die Steuerung (300) ferner dazu konfiguriert ist, um die Lichtquelle (10) während der positiven Beleuchtungszeit (*t*111, *t*121, *t*131) einzuschaltet, wenn sich die Strahlablenkungsvorrichtung (80) nicht bewegt und das schmalbandige Licht (200) auf eine der Mikrolinsen (71) lenkt, und die Lichtquelle (10) zu jeder anderen Zeit auszuschalten; worin sich die Strahlablenkungsvorrichtung während der negativen Setup-Zeit (*T*11, *T*12, *T*13) und der Beleuchtungszeit (*T*111, *T*121, *T*131) des vorherigen Beleuchtungsschritts und der positiven Setup-Zeit des folgenden Beleuchtungsschritts von einer Position in eine andere bewegt; und worin mindestens eine positive Setup-Zeit (*t*11, *t*12, *t*13) und eine positive Beleuchtungszeit (*t*111, *t*112, *t*113) einer Farbe mit der entsprechenden negativen Setup-Zeit (*T*11, *T*12, *T*13) und negativen Beleuchtungszeit (*T*111, *T*112, *T*113) invertiert ist, sodass die Strahlablenkungsvorrichtung (80) mehr Zeit hat, um sich von einer Position in eine andere zu bewegen während der negativen Setup- und Beleuchtungszeit des letzten Beleuchtungsschritts plus der negativen Setup- und Beleuchtungszeit des nächsten Beleuchtungsschritts plus der positiven Setup-Zeit des nächsten Beleuchtungsschritts.

17. Am Körper tragbare Vorrichtung (Wearable Device), umfassend das Lichtfeld-Bildprojektionssystem gemäss irgendeinem der Ansprüche 1 bis 16, umfassend eine Vorrichtung für erweiterte/gemischte Realität (Augmented/Mixed Reality) oder eine Datenbrille (Smart Glasses).

## Revendications

1. Système de projection d'image de champ lumineux comprenant :
une source de lumière (10) comprenant une source de lumière à point de bande étroite unique par couleur et configurée pour émettre une lumière à bande étroite (200) dont le spectre de longueur d'onde est une bande étroite ; un dispositif de division (20, 30, 70, 80) configuré pour générer séquentiellement une pluralité de faisceaux de lumière incidents (220) et former une pluralité de sources de lumière virtuelle (50) à différentes positions dans un premier plan d'image (31) ; un modulateur spatial de lumière (40) configuré pour générer une lumière de faisceau modulée (240) et une image virtuelle pour chaque faisceau de lumière incident (220) ; et un combineur (100) configuré pour projeter les images virtuelles aux points de vue virtuels (60) à l'intérieur d'une région de boîtier oculaire (121) et pour transmettre la lumière naturelle du monde réel (80) vers le boîtier oculaire (121),
chaque point de vue (60) contenant une image de la scène virtuelle vue depuis ce point de vue (60) ; dans lequel le dispositif de division (20, 30, 70, 80) est en outre configuré pour diriger les faisceaux de lumière incidents (220) vers le modulateur spatial de lumière (40) de telle sorte que les faisceaux de lumière incidents (220) sont incidents sur la surface du modulateur spatial de lumière (40) à différents angles d'incidence (θ), et de telle sorte à sélectionner séquentiellement au moins l'un des points de vue virtuels (60) qui est visible dans le boîtier oculaire (121) ; et
dans lequel le rapport de l'intensité lumineuse d'une seule source de lumière virtuelle (50) de ladite pluralité de sources de lumière virtuelle (50) sur l'intensité lumineuse de la lumière à bande étroite (200) est d'au moins 1 %.

2. Le système de projection selon la revendication 1,
dans lequel les faisceaux de lumière incidents (220) ont une intensité lumineuse qui correspond substantiellement à l'intensité lumineuse de la lumière à bande étroite (200) divisée par le nombre de sources de lumière virtuelle (50).

3. Le système de projection selon la revendication 1 ou 2,
dans lequel le dispositif de division comprend un élément diffractant (20) configuré pour générer la pluralité de faisceaux de lumière incidents (220) à différents angles d'incidence (θ) à partir de la lumière à bande étroite (200), une lentille optique (70) configurée pour former la pluralité de sources de lumière virtuelle (50), et un réseau d'obturateur actif (30) configuré pour sélectionner séquentiellement au moins l'un des points de vue virtuels (60) qui est visible dans le boîtier oculaire (121).

4. Le système de projection selon la revendication 3
dans lequel la lentille optique est une lentille unique (70), chacun des faisceaux de lumière incidents (220) passant par une portion de la lentille (70) en fonction de l'angle d'incidence (θ) du faisceau de lumière incident (220).

5. Le système de projection selon la revendication 3,
dans lequel la lentille optique (70) est un réseau de lentilles comprenant une pluralité de micro-lentilles (71), chacun des faisceaux de lumière incidents (220) passant par l'une des micro-lentilles (71) en fonction de l'angle d'incidence (θ).

6. Le système de projection selon l'une quelconque des revendications 3 à 5, dans lequel l'élément diffractant (20) comprend un élément optique diffractif (DOE), un élément optique holographique (HOE), un réseau de cristal liquide à polarisation (LCPG), une surface semi-réfléchissante, un miroir ou une métasurface.

7. Le système de projection selon la revendication 1 ou 2,
dans lequel le dispositif de division comprend un réseau de lentilles (70) comprenant une pluralité de micro-lentilles (71), chaque micro-lentille (71) générant un faisceau de lumière incident (220) à un angle d'incidence (θ) différent de l'angle d'incidence (θ) du faisceau de lumière incident (220) généré par une autre lentille (71) ; et un réseau d'obturateur actif (30) configuré pour sélectionner séquentiellement au moins l'un des points de vue virtuels (60) qui est visible dans le boîtier oculaire (121).

8. Le système de projection selon l'une quelconque des revendications 5 à 7, dans lequel la taille de la lumière à bande étroite (200) correspond substantiellement à la taille du réseau de lentilles (70).

9. Le système de projection selon la revendication 1,
dans lequel le dispositif de division comprend un dispositif de direction de faisceau (80) et un réseau de lentilles (70) comprenant une pluralité de micro-lentilles (71), le dispositif de direction de faisceau (80) étant piloté de manière à diriger la lumière à bande étroite (200) vers l'une des micro-lentilles (71) pour générer un faisceau de lumière incident (220) à un angle d'incidence (θ).

10. Le système de projection selon la revendication 9,
dans lequel la taille de la lumière à bande étroite (200) correspond substantiellement à la taille d'une micro-lentille (71), de telle sorte que le faisceau de lumière incident (220) a une intensité lumineuse qui est substantiellement 100 % de l'intensité lumineuse de la lumière à bande étroite (200).

11. Le système de projection selon l'une quelconque des revendications 3 à 8, dans lequel le réseau d'obturateur actif (30) comprend un dispositif de cristal liquide ferroélectrique transparent ou réfléchissant, ou un réseau de micromiroirs actifs.

12. Le système de projection selon l'une quelconque des revendications 3 à 8, dans lequel le réseau d'obturateur actif (30) est disposé substantiellement dans le premier plan d'image (31) de telle sorte qu'au moins l'une des sources de lumière virtuelle (50) est transmise à un moment donné.

13. Le système de projection selon l'une quelconque des revendications 3 à 8, dans lequel le réseau d'obturateur actif (30) est disposé entre la source de lumière (10) et le dispositif de division (70) ou entre le modulateur spatial de lumière (40) et le boîtier oculaire (121).

14. Le système de projection selon l'une quelconque des revendications 1 à 13, dans lequel la source de lumière (10) comprend une source de lumière point laser rouge configurée pour générer de la lumière rouge, une source de lumière point laser verte configurée pour générer de la lumière verte, et une source de lumière point laser bleue configurée pour générer de la lumière bleue ; ou dans lequel la source de lumière (10) comprend une source de lumière à point de bande étroite unique configurée pour émettre de la lumière blanche comprenant de la lumière rouge, de la lumière verte, et de la lumière bleue.

15. Le système de projection selon l'une quelconque des revendications 9 à 14, dans lequel le modulateur spatial de lumière (40) comprend un cristal liquide ferroélectrique sur silicium ; et dans lequel le système de projection d'image de champ lumineux comprend un contrôleur (300) configuré pour contrôler l'état de commutation du modulateur spatial de lumière (40) en synchronisation avec le dispositif de direction de faisceau (80) et la source de lumière (10).

16. Le système de projection selon la revendication 15, dans lequel le contrôleur (300) est configuré pour commuter un état de couleur du modulateur spatial de lumière (40) pendant un temps de configuration positif (t11, t12, t13) et un temps de configuration négatif (T11, T12, T13), et pour maintenir le modulateur spatial de lumière (40) dans l'état de couleur commuté pendant un temps d'illumination positif (t111, t121, t131) et un temps d'illumination négatif (T111, T121, T131) ; dans lequel le contrôleur (300) est en outre configuré pour allumer la source de lumière (10) pendant le temps d'illumination positif (t111, t121, t131) lorsque le dispositif de direction de faisceau (80) n'est pas en mouvement et dirige la lumière à bande étroite (200) vers l'une des micro-lentilles (71), et pour éteindre la source de lumière (10) à tout autre moment ; dans lequel le dispositif de direction de faisceau se déplace d'une position à une autre pendant le temps de configuration négatif (T11, T12, T13) et le temps d'illumination (T111, T121, T131) de l'étape d'illumination précédente et le temps de configuration positif de l'étape d'illumination suivante ; et dans lequel au moins un temps de configuration positif (t11, t12, t13) et un temps d'illumination positif (t111, t112, t113) d'une couleur est inversé avec le temps de configuration négatif correspondant (T11, T12, T13) et le temps d'illumination négatif correspondant (T111, T112, T113) de sorte que le dispositif de direction de faisceau (80) puisse avoir plus de temps pour se déplacer d'une position à une autre pendant le temps de configuration et d'illumination négatif de la dernière étape d'illumination plus le temps de configuration et d'illumination négatif de l'étape d'illumination suivante plus le temps de configuration positif de l'étape d'illumination suivante.

17. Dispositif portable comprenant le système de projection d'image de champ lumineux selon l'une quelconque des revendications 1 à 16, comprenant un dispositif de réalité augmentée/mixte ou des lunettes intelligentes.
